(19) Europäisches Patentamt
European Patent Office
Office européen des brevets

(11)  EP 1 805 071 B1

(12)  **EUROPEAN PATENT SPECIFICATION**

(45) Date of publication and mention
of the grant of the patent:
**22.02.2017  Bulletin 2017/08**

(21) Application number: **05809998.7**

(22) Date of filing: **11.10.2005**

(51) Int Cl.:
*B60W 10/04* (2006.01)     *B60W 10/18* (2012.01)
*B62M 1/00* (2010.01)      *B62K 17/00* (2006.01)
*A61G 5/04* (2013.01)      *B62M 23/02* (2010.01)
*B62D 37/00* (2006.01)

(86) International application number:
**PCT/US2005/036798**

(87) International publication number:
**WO 2006/042302 (20.04.2006 Gazette 2006/16)**

(54) **VEHICLE CONTROL BY PITCH MODULATION**

FAHRZEUGSTEUERUNG DURCH NEIGUNGSMODULATION

COMMANDE DE VEHICULE PAR MODULATION DE TANGAGE

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.10.2004  US 617244 P**

(43) Date of publication of application:
**11.07.2007  Bulletin 2007/28**

(73) Proprietor: **DEKA PRODUCTS LIMITED PARTNERSHIP**
**Manchester, NH 03101 (US)**

(72) Inventors:
• **KAMEN, Dean**
**Bedford, NH 03110 (US)**
• **AMBROGI, Robert, R.**
**Manchester, NH 03104 (US)**

• **FLYNN, Catharine, N.**
**Manchester, NH 03102 (US)**
• **KERWIN, John, M.**
**Manchester, NH 03104 (US)**

(74) Representative: **Greene, Simon Kenneth et al Elkington and Fife LLP**
**Prospect House**
**8 Pembroke Road**
**Sevenoaks, Kent TN13 1XR (GB)**

(56) References cited:
**WO-A-2004/007264     GB-A- 2 388 579**
**US-A- 6 003 624      US-A1- 2002 121 394**
**US-A1- 2003 014 167   US-A1- 2003 226 698**
**US-A1- 2004 069 543   US-B1- 6 302 230**
**US-B1- 6 311 794     US-B1- 6 332 103**
**US-B1- 6 553 271     US-B1- 6 789 640**

EP 1 805 071 B1

**Description**

Technical Field

The present invention pertains to methods for actively maintaining stability and control of the motion of a vehicle equipped with one or more forward wheels and one or more aft wheels, whereby balanced operation may be enabled in case the front wheels lose, or are removed from, contact with the ground.

Background of the Intention

Human transport devices serve to move a person over a surface and may take many different forms. For example, a human transport device, as the term is used herein, may include, but is not limited to, wheelchairs, motorized carts, all-terrain vehicles, bicycles, motorcycles, cars, hovercrafts, and the like. Some types of human transport may include stabilization mechanisms to help ensure that the device does not fall over and injure the user of the transport device.

A typical four-wheeled wheelchair contacts the ground with all four wheels. If the center of gravity of the combination of the wheelchair and the user remains over the area between the wheels, the wheelchair should not tip over. If the center of gravity is located above and outside of the ground contacting members of the transport device, the transport device may become unstable and tip over.

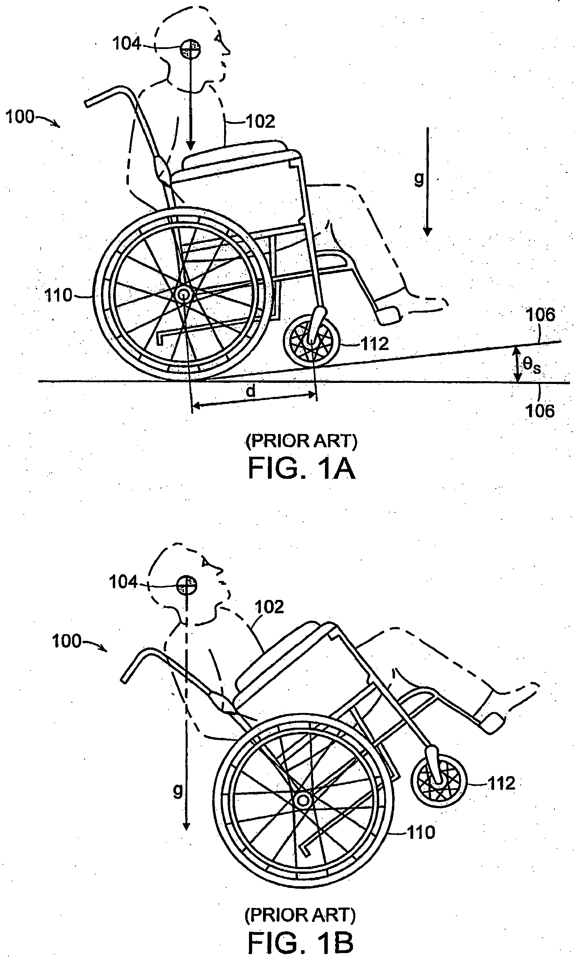

Referring now to FIG. 1A, a typical wheelchair **100** is shown. The wheelchair **100** and the user **102** define a frame. The frame has a center of gravity **104** located at a position vertically disposed above the surface **106**. The term "surface" as it is used herein refers to any surface upon which a human transport device may sit or locomote. Examples of a surface include flat ground, an inclined plane such as a ramp, a gravel covered street, and may include a curb which vertically connects two substantially parallel surfaces vertically displaced from one another (e.g., a street curb).

The surface **106** may be at an incline as compared to the horizontal axis **108** (which is a line in the plane transverse to the local vertical). The angle by which the surface **106** is offset from the horizontal axis **108** is called the surface pitch and will be represented by an angle denoted as $\theta_s$.

The front wheel **112** and the rear wheel **110** of the wheelchair **100** are separated by a distance **d**. The distance d between the two wheels may be measured as a linear (e.g., straight line) distance. The wheels **110** and **112** typically have opposing counterparts (not shown) on the other side of the wheelchair. The opposing counterparts may each share an axis with wheels **110** and **112**, respectively. The area covered by the polygon which connects the points where these four wheels touch the ground (or the outside portions of the ground contacting parts, when the ground contacting part may cover more than a point) provides an area over which the center of gravity **104** may be located while the wheelchair remains stable. This area may be referred to as the footprint of the device. The footprint of a device, as the term is used herein, is defined by the projection of the area between the wheels as projected onto the horizontal plane. If the center of gravity is above this location, the transport device should remain stable.

If the center of gravity **104** is vertically displaced above the surface **106** and outside the footprint (i.e., the projection of area between the wheels **110** and **112** onto the horizontal plane), wheelchair **100** may tip over. This could happen, for example, when the wheelchair is on a surface that has a steep incline, or, alternatively, if the user 'pops a wheelie' in order to surmount a curb, for example. When on a steep incline, the center of gravity **104** may shift back and cause the wheelchair **100** to flip over backwards. This is shown in FIG. 1B where the center of gravity **104** is located at a position that is outside the footprint of the wheelchair **100**. The center of gravity **104** is shown including a gravity acceleration vector (**g**) which linearly translates the center of gravity **104** in a downward direction. The wheelchair **100** may rotate about an axis of the rear wheel **110** until the wheelchair **100** contacts the surface being traversed.

User **102** may help to return the center of gravity **104** to a location that is above the area between the wheels **110** and **112** by leaning forward in the wheelchair **100**. Given this limited control of the location of the center of gravity **104,** it is clear that human transport devices such as wheelchairs may encounter great difficulties when traversing uneven surfaces such as a curb or steps.

Some vehicles, by virtue of their weight distribution or typical modes of operation are prone to fore-aft instability and end-over-end ("endo") rollovers. In operation of an all-terrain vehicle (ATV), for example, it is not always possible or desirable to maintain all wheels of the vehicle in contact with the underlying surface at all times. Yet, it is desirable to preclude loss of control of the vehicle or end-over-end roll-over. ATVs may benefit from stabilization in one or more of the fore-aft or left-right planes, especially under conditions in which fewer than a stable complement of wheels are in contact with the ground. Vehicles of this sort may be more efficiently and safely operated employing control modes supplementary to those described in the prior art.

Reference may be made to the following, for example:

WO 2004/007264 A1, which relates to the control of a transported based on attitude; GB 2 399 579 A, which relates to a vehicle differential control; US 2003/0014167 A1, which relates to a device for attenuating the pitching of an engine driven vehicle; and US 2003/226698 A1, which relates to a hybrid human/electric vehicle.

Summary of the Invention

In accordance with an aspect of the invention, there is provided a method for fore-aft stabilization of a vehicle for motion in a specified direction over an underlying surface, the vehicle having a plurality of driven wheels including a forward wheel and an aft wheel, and with the forward wheel having a force normal to the instantaneous direction of motion of the vehicle, according to claim 1. The method includes the steps of applying a periodic torque to at least one of the wheels for inducing a small pitch modulation, detecting pitch variation of the vehicle in response to the applied periodic torque, detecting a force on the forward wheel normal to the instantaneous direction of motion of the vehicle, and applying a stabilizing torque to the aft wheel on the basis, at least, of any detected pitch variation in response to the applied periodic torque and the detected force on the forward wheel normal to the instantaneous direction of motion of the vehicle.

In accordance with an aspect of the invention there is provided an apparatus for pitch stabilization of the motion of a vehicle having at least one forward wheel and at least one aft wheel according to claim 6. The apparatus includes a sensor for sensing a force on the forward wheel normal to an instantaneous direction of motion of the vehicle. The apparatus has a motor actuator for driving the aft wheel, and a controller for applying a torque to the aft wheel on the basis of a control law based at least on the normal force on the forward wheel, the controller being configured to apply a periodic torque to at least one of the wheels for inducing a small periodic pitch modulation; and a pitch detector arranged to detect pitch variation of the vehicle in response to the applied periodic torque; wherein the controller is configured to cause the motor actuator to a apply a stabilizing torque to the at least one aft wheel on the basis of at least any detected pitch in response to the applied periodic torque and the detected force on the forward wheel normal to the instantaneous direction of motion of the vehicle.

In an embodiment of the present invention, a stabilized vehicle is provided according to claim 8 that has at least one forward wheel and at least one aft wheel. The vehicle includes an apparatus for pitch stabilization according to claim 6, and has a sensor for sensing an instantaneous pitch of the vehicle. The vehicle may include an all-terrain vehicle, a motorcycle, or a wheelchair.

Brief Description of the Drawings

The invention will be more readily understood by reference to the following description, taken with the accompanying drawings, in which:

FIGS. IA and IB are schematic side views of a prior art personal vehicle of the type in which an embodiment of the invention may be advantageously employed;
FIG. 2 is a diagram of typical components of a personal vehicle of the type in which an embodiment of the invention may be advantageously employed indicating the variables used in the description of specific embodiments of the present invention;
FIG. 3 is a block diagram depicting the coupling of pitch and yaw controller outputs for generation of wheel amplifier commands;
FIG. 4A is a block diagram showing the constitutive inputs of a pitch command in accordance with an embodiment of the present invention;
FIG. 4B is a block diagram showing the constitutive inputs of a pitch command with a unilateral limit in accordance with an embodiment of the present invention;
FIG. 5A is a block diagram showing the constitutive inputs of a yaw command in accordance with embodiments of the present invention;
FIGS. 5B and 5C are block diagrams of different embodiments of a yaw controller in accordance with embodiments of the present invention;
FIG. 6 is a side view of an all-terrain vehicle capable of balancing operation in accordance with one embodiment of the present invention;
FIG. 7 is a perspective view from above of the embodiment of the invention of Fig. 6;
FIG. 8 is a further side view of the all-terrain vehicle of Fig. 6 showing operation by a standing user;
FIG. 9 is yet a further side view of the all-terrain vehicle of Fig. 6 showing operation by a seated user;
FIG. 10 shows the coupling of the handlebar to the upper pushrods for steering of the front wheels in accordance with a preferred embodiment of the invention; and
FIG. 11 shows the coupling of the lower pushrods to steer the forward wheels, in accordance with the embodiment of Fig. 10.

Detailed Description of Specific Embodiments Definitions:

A vehicle may be said to act as "balancing" if it is capable of operation on one or more wheels but would be unable to stand on those wheels alone, but for operation of a control loop governing operation of the wheels. A balancing vehicle, when operated in a balancing mode, lacks static stability but is dynamically balanced. The wheels, or other ground-contacting elements, that provide contact between such a vehicle and the ground or other underlying surface, and minimally support the transporter with respect to tipping during routine operation, are referred to herein as "primary wheels." "Stability" as used in this description and in any appended claims refers to the mechanical condition of an operating position with respect to which the system will naturally return if the system is perturbed away from the operating position in any respect. The term "system" refers to all mass caused to move due to motion of the wheels with respect to the surface over which the vehicles is moving, and thus includes both the vehicle and the rider.

The term "lean" is often used with respect to a system balanced on a single point of a perfectly rigid member. In that case, the point (or line) of contact between the member and the underlying surface has zero theoretical width. In that case, furthermore, lean may refer to a quantity that expresses the orientation with respect to the vertical (i.e., an imaginary line passing through the center of the earth) of a line from the center of gravity (CG) of the system through the theoretical line of ground contact of the wheel. Recognizing that the tire of an actual wheel is not perfectly rigid, the term "lean" is used herein in the common sense of a theoretical limit of a rigid ground-contacting member.

Operation in Accordance with Embodiments of the Invention:

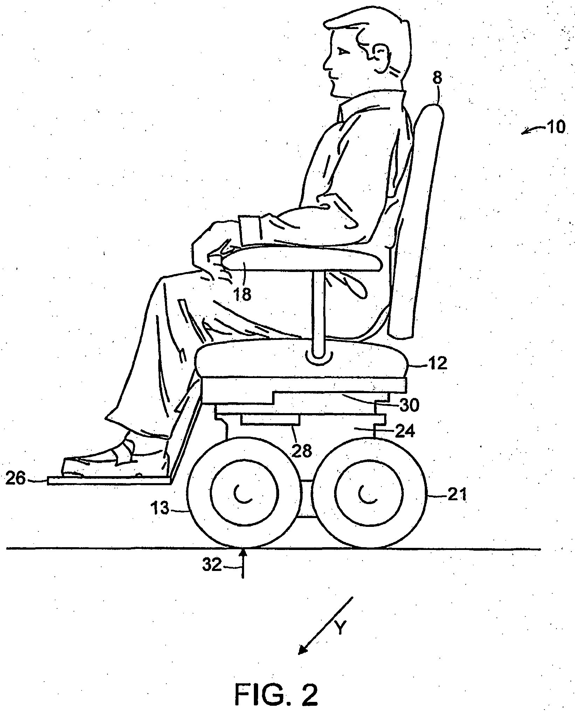

One embodiment of a stabilized vehicle in accordance with the present invention is depicted in Fig. 2 and designated generally by numeral 10. User 8, as shown in Fig. 2, is seated position on user support 12 of vehicle 10, though it is to be understood that user 8 may be supported otherwise than by sitting on a seat, and may, for example, within the scope of the present invention, be standing on a user support in the form of a platform.

Aft wheels 21 (of which only one is visible in the side-view of Fig. 2) are coaxial about an axis defined as the Y axis. Each of rear wheels 21 is driven by a motor actuator (not shown) disposed within a power base 24 such that steering may be effectuated through differential torque applied to respective rear wheels 21. Compensating, by differential actuation of the rear wheels for the increased rotational travel of the outer wheel on a turn may be referred to herein as an "active differential." Rider 8 may be supported on vehicle 10 in various body positions, thereby controlling the position of the center of mass of the vehicle, as governed by the distribution of weight of the load, namely the user. For example, user 8 may be seated, as shown in Fig. 2, on seat 12, with his feet resting on footrest 26.

The embodiment shown of vehicle 10, additionally, has two forward wheels 13 (of which one is visible in the side view of Fig. 2), typically in contact with the ground during ordinary operation. Forward wheel 13 and one or more other forward wheels may be mounted on a common axle or otherwise, and pivoting of any of the forward wheels is within the scope of the present invention. Personal vehicles designed for enhanced maneuverability and safety may also include one or more clusters of wheels, with the cluster and the wheels in each cluster capable of being motor-driven independently of each other. Such vehicles are described in U.S. Patent nos. 5,701,965, 5,971,091, 6,302,230, 6,311,794, and 6,553,271, all of which patents are incorporated herein by reference.

Controller 30 provides for stability of the vehicle by continuously sensing the orientation of the vehicle and the commanded velocity, as described in detail below, determining the corrective action to maintain stability, and commanding the wheel motors to make any necessary corrective action.

In accordance with preferred embodiments of the present invention, the same control law is applied whether or not forward wheels of the vehicle are in contact with the ground.

Steering or other control may be provided by means of a user input device 18, which may be a joystick, handlebars or by any other user input mechanisms. A variety of steering devices which are further examples of user input mechanisms that may be employed within the scope of the present invention are described in U.S. Patents nos. 6,581,714 and 6,789,640.

A sensor unit 28 is provided as part of power base 24 for providing one or more sensor signals to controller 30. Sensor unit 28 may provide a measure of pitch rate and/or pitch of the vehicle, and may employ inertial sensing of the type described in detail in US Patent no. 6,332,103. Additionally, sensor unit 28 may include a force sensor for measuring the force (designated by arrow 32) normal to the underlying surface that is exerted on the underlying surface by wheel 13 (and, reciprocally, on the wheel by the underlying surface). Force sensors, such as those based on piezoresistors, are well-known in the art, and any kind of force sensor is within the scope of the present invention.

A simplified control algorithm for achieving balance in the embodiment of the invention according to Fig. 2 is now described. The control algorithm is described for the case of a single driven wheel, as may be employed for stabilization of an in-line bicycle or motorcycle. The generalization to the case of multiple driven wheels is discussed in detail below.

To achieve dynamic control to insure stability of the system, the wheel torque T in this embodiment is governed by the following simplified control equation:

$$T = K1_{(\theta)} \cdot (\theta - \theta_0) + K2 \cdot \dot{\theta} + K3 \cdot (v - v_{command}) + K4 \cdot \int (v - vcommand)\, dt + A \cdot f(\omega t),$$

(Eqn. 1)

where:

- T denotes a torque applied to a ground-contacting element about its axis of rotation;
- $K1 (\theta)$ is a gain function that may depend, as discussed below, on the instantaneous value of lean $\theta$;
- $\theta$ is a quantity corresponding to the lean of the entire system about the ground contact region beneath the common axis Y of the rear wheels, with $\theta_0$ representing the magnitude of a system pitch offset, all as discussed in detail below;
- v identifies the fore-aft velocity along the surface, with vcommand representing the magnitude of a user input such as a throttle constituted by user input (e.g., joystick) 18;
- a dot over a character denotes a variable differentiated with respect to time; and

· a subscripted variable denotes a specified offset that may be input into the system as described below; and
· $K_1$, $K_2$, $K_3$ and $K_4$ are gain functions or coefficients that may be configured, either in design of the system or in real-time, on the basis of a current operating mode and operating conditions as well as preferences of a user. The gain coefficients may be of a positive, negative, or zero magnitude. The gains $K_1$, $K_2$, $K_3$ and K4 are dependent upon the physical parameters of the system and other effects such as gravity. The simplified control algorithm of Eqn. 1 maintains balance of the vehicle in the presence of changes to the system's center of mass due to body motion of the rider or features of the underlying terrain.

The final term of Eqn. (1) allows for application of a periodic driving component, of period $2\pi/\omega$, and amplitude A (which may be zero, in the case of no applied modulation), to the torque applied to the driven wheel. The periodic function $f(\omega t)$ may be a sinusoidal function, for example.

It should be noted that the amplifier control may be configured to control motor current (in which case torque **T** is commanded) or, alternatively, the voltage applied to the motor may be controlled, in which case the commanded parameter is velocity.

The effect of $\theta_0$ in the above control equation (Eqn. 1) is to produce a specified offset $\theta_0$ from the non-pitched position, $\theta = 0$. Adjustment of $\theta_0$ will adjust the vehicle's offset from a non-pitched position. In some embodiments, pitch offset may be adjusted by the user. Alternatively, $\theta_0$ can be set by the control system of the vehicle as a method of limiting the speed and/or the performance of the vehicle. In a preferred embodiment of the invention, a backward tilting limit is imposed, with the gain function $K_1$ substantially zero until the tilting limit is approached. Thus, the rider is free to lean the vehicle backward by shifting his weight, and thus the center-of-mass of the vehicle system, backward, until the tilt limit is approached. Then, $K_1$ assumes a non-zero value, and a term appears in control equation (1) that tends to counteract further backward leaning of the vehicle.

The magnitude of $K_3$ determines the gain of the user input, and may advantageously be a non-linear function, providing, for example, greater sensitivity near zero velocity. The $K_2$ term provides for control based on the instantaneous pitch rate, $\dot{\theta}$, of the vehicle, as measured by a pitch rate sensor or by differentiation of a measured pitch.

The response of a normal force **32** measured by sensor **28** in response to the applied pitch modulation $Af(\omega t)$, may be used, in accordance with embodiments of the invention, to counteract further backward leaning of the vehicle and maintain contact of the forward wheel with the ground, or, alternatively, impose a limit on rearward tilt.

In order to accommodate two wheels instead of the one-wheel system that has been described with respect to Eqn. 1, separate motors may be provided for left and right wheels of the vehicle and the torque desired from the left motor and the torque to be applied by the right motor can be governed in the general manner described above. Additionally, tracking both the left wheel motion and the right wheel motion permits adjustments to be made to prevent unwanted turning of the vehicle and to account for performance variations between the two drive motors.

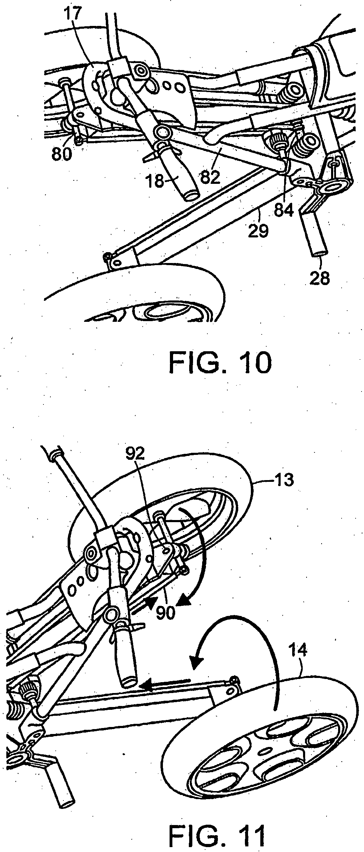

In accordance with preferred embodiments of the invention, differential drive of the two rear wheels tracks turns according to the same yaw input as applied, via mechanical linkages, to the front wheels. This operation is described below, with reference to Figs. 10 and 11.

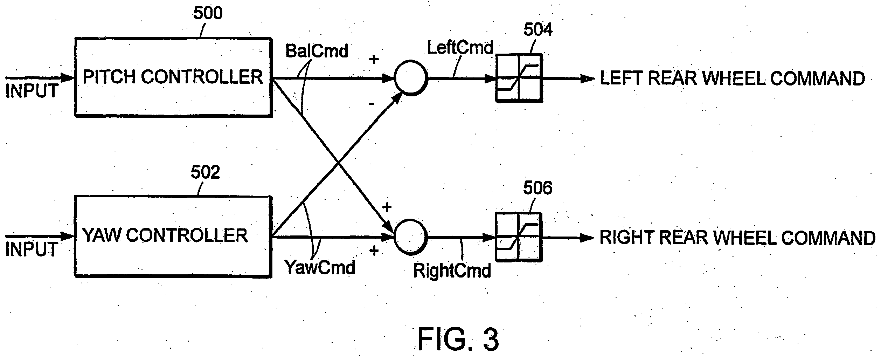

Referring now to Fig. 3, steering, or yaw control, of the vehicle may be accomplished by adding a turning command to the wheel amplifiers and have the following form. Inputs (described below) corresponding to values of vehicle parameters are used by Pitch Controller **500** and Yaw Controller **502** to derive a balance control signal BalCmd and a yaw control signal YawCmd according to algorithms discussed in the succeeding paragraphs.

$$LeftCmd = BalCmd + YawCmd \quad (2)$$

$$RightCmd = BalCmd - YawCmd \quad (3)$$

The LeftCmd and RightCmd are the command sent by the controllers **500** and **502** to the left and right motor amplifiers, respectively, after differentiation or other conditioning as appropriate. For instance and as shown by way of example in Fig. 3, the LeftCmd and RightCmd's may be conditional, respectively, by differentiators **504** and **506**. The LeftCmd and RightCmd represent voltage if the amplifiers are in voltage control mode, current if the amplifiers are in current control mode, or duty cycle if the amplifiers are in duty cycle control mode. BalCmd is the command sent by the Pitch Controller **500** to each amplifier to maintain the transporter in a balanced state while moving or while at rest. The YawCmd causes the transporter to turn by reducing the command to one of the wheels while increasing the command to the other wheel. For example, a positive YawCmd increases the command to the left wheel while decreasing the command to the right wheel thereby causing the transporter to execute a right turn. The YawCmd may be generated by a yaw-input device described above with no feedback loop or in a closed cycle loop to correct yaw position errors as described in U.S. Patent no.6,288,505.

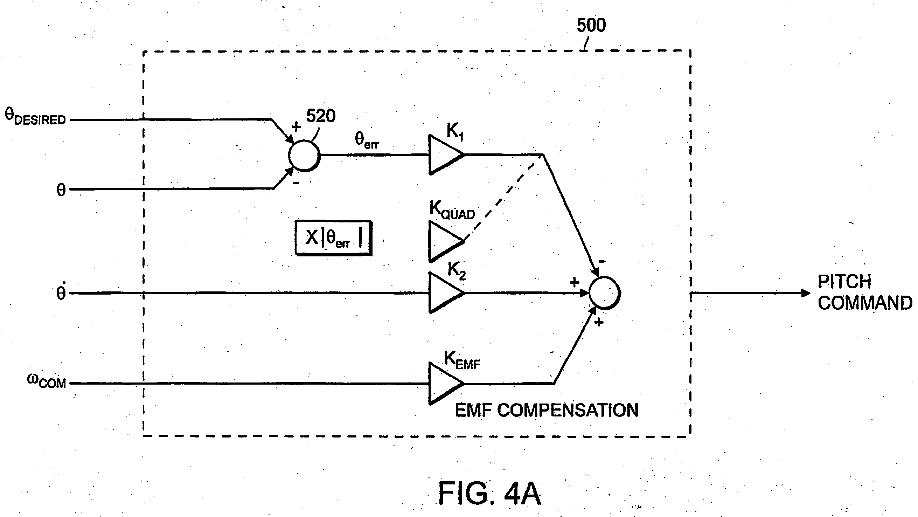

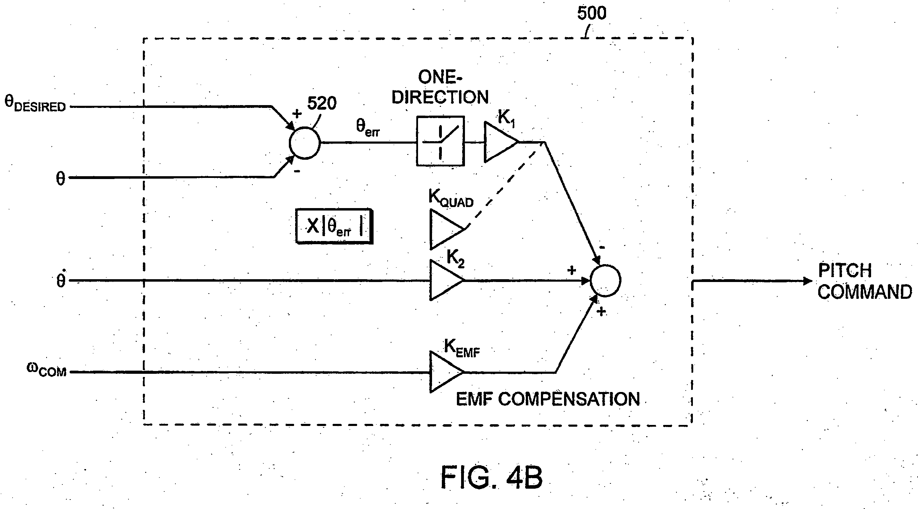

Pitch controller **500** is described in detail with reference to Figs. 4A and 4B. The inputs include a desired pitch $\theta_{desired}$, the actual measured pitch $\theta$, the pitch rate $\dot{\theta}$, and the component of the wheel rotation velocity that is common to the two primary wheels, $\omega_{com}$. Both $\theta$ and $\dot{\theta}$ may be derived from inertial sensing, as descried in U.S. Patent no. 6,332,103.

Desired pitch $\theta_{desired}$ and current instantaneous pitch $\theta$ are differenced in summer **520** to produce a pitch error $\theta_{err}$. In accordance with certain embodiments of the present invention, pitch limiting is unilateral, such that a limit is provided on one end of a range of allowed values of pitch. If that pitch is exceeding, a restoring torque moves the vehicle in the direction of the pitch limit.

In accordance with some embodiments of the invention, the user may shift her weight backward, thereby 'popping' the vehicle into a two-wheeled balancing condition where stability is maintained until she shifts her weight forward to restore operation on all wheels.

A term quadratic in pitch error $\theta_{err}$ (preserving the sign of the actual pitch error) may also be provided, as shown in Fig. 4B, thereby providing more intense response to large deviations in pitch as may result from encountering an obstacle, for example. In a voltage control mode, it is desirable to provide an additional term proportional to the wheel rotational velocity to compensate for all, or a portion, of the back-emf generated in proportion to the rotational velocity of the motors.

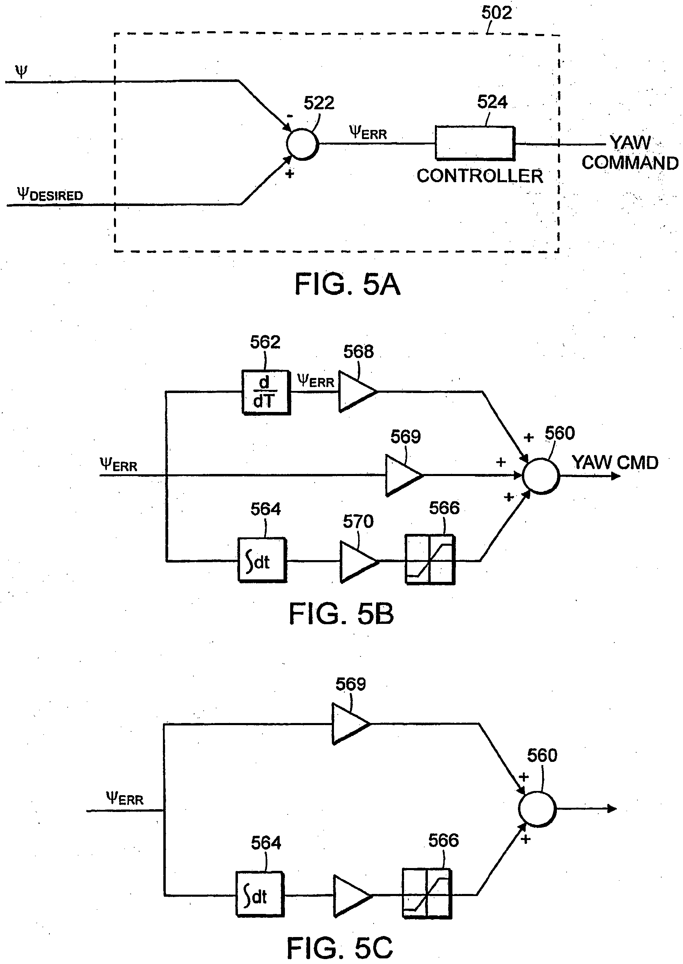

Yaw controller **502** is described in detail with reference to Figs. 5A-5C. Fig. 5A depicts the differencing, in summer **522**, of the current yaw value $\psi$ with respect to the desired yaw value $\psi_{desired}$ to obtain the current yaw error $\psi_{err}$. Desired yaw value $\psi_{desired}$ is obtained from a user input such as joystick **18 or** other user input device employed for directional input as discussed above. The current value of yaw is derived from various state estimates, such as the differential wheel velocities, inertial sensing, etc. Derivation of the yaw command from the yaw error is provided by controller **524** according to various processing algorithms.

Two examples of yaw control algorithms are shown in Figs. 5B and 5C. Specifically, Fig. 5B shows a control law implemented input signal $\psi_{err}$ is added, by summer **560**, to the derivative of itself (output of differentiator **562**) and the integration of itself (output of integrator **564**). Of course, and as shown by in Fig. 5B, each signal could have a gain applied to it (for example, by gain blocks **568**, **569**, and **570**) or other signal processing such as smoother **566**.

Another possibility is to simply omit the derivative signal as shown in Fig. 5C.

Of course, various controller transfer strategies may be implemented with proportional, derivative, and 'three term' 'PID' functions as depicted.

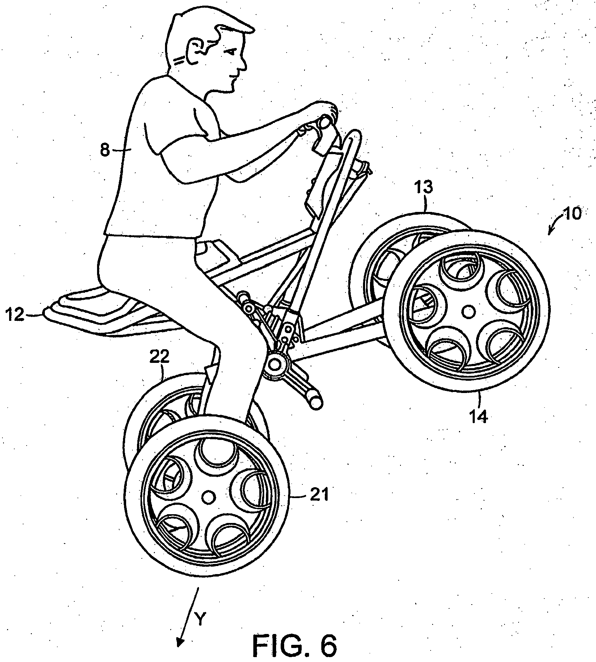

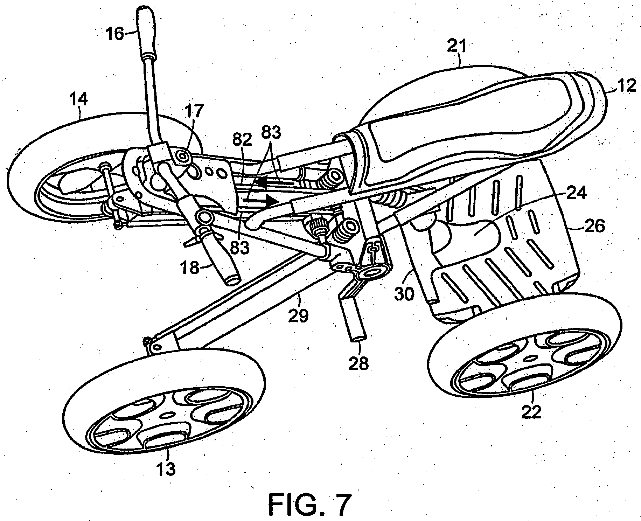

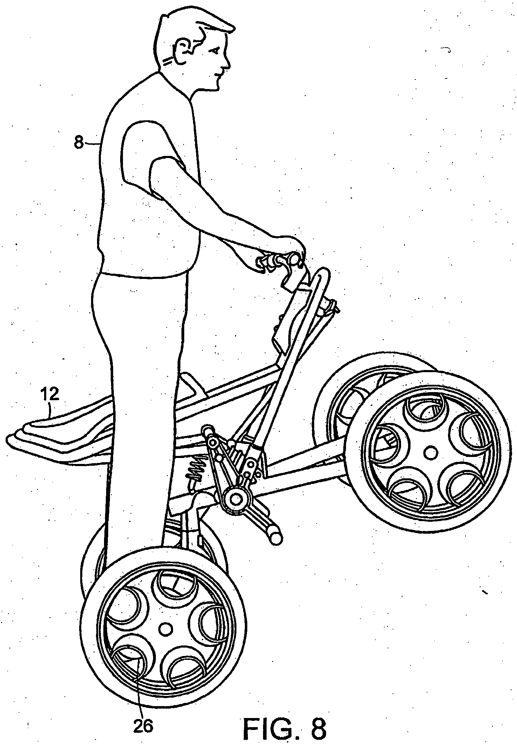

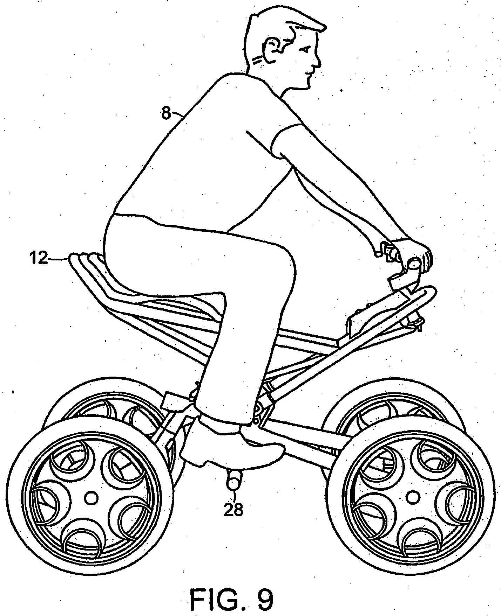

The present invention may also be embodied in a balancing all-terrain vehicle as depicted in Fig. 6 and designated generally by numeral **10**. User **8**, as shown in Fig. 6, is in a seated position on user support **12** of all-terrain vehicle 10. Aft wheels **21** and **22** are shown as coaxial about an axis defined as the **Y** axis. Referring now to the perspective view of all-terrain vehicle **10**, from the top, shown in Fig. 7, each of rear wheels **21** and **22** is driven by a motor actuator **24** such that steering may be effectuated through differential torque applied to of rear wheels **21** and **22**. Compensating, by differential actuation of the rear wheels for the increased rotational travel of the outer wheel on a turn may be referred to herein as an "active differential." Rider **8** may be supported on vehicle **10** in various body positions, thereby controlling the position of the center of mass of the vehicle, as governed by the distribution of weight of the load, namely the user. For example, user **8** may be seated, as shown in Fig. 6, on seat **12**, with his feet resting on platform **26** (shown in Fig. 7), and may shift his weight relative to the vehicle by positioning himself along the length of seat **12**. Alternatively, user **8** may stand on platform **26**, with legs athwart seat **12**, as shown in Fig. 8, or may sit on seat **12** with feet resting on foot rests **28**, as shown in Fig. 9.

Referring again to Fig. 6, the embodiment shown of vehicle **10**, additionally, has two forward wheels, **13** and **14**, typically in contact with the ground during ordinary operation. In the embodiment of the invention shown, by way of example in Fig. 7, each forward wheel **13** and **14** is mounted on a separate suspension strut **29** such that each forward wheel is suspended independently of one another.

Controller **30** (shown in Fig. 7) provides for stability of the vehicle by continuously sensing the orientation of the vehicle and the commanded velocity, as has been described above, determining the corrective action to maintain stability, and commanding the wheel motors to make any necessary corrective action. In accordance with preferred embodiments of the present invention, the same control law may be applied whether or not forward wheels **13** and **14** of the vehicle **10** are in contact with the ground.

Steering or other control may be provided by the user's rotation of handlebar **18** (shown in Fig. 7) about pivot **17**, or by any other user input mechanisms, A variety of steering devices which are further examples of user input mechanisms that may be employed within the scope of the present invention are described in U.S. Patent nos. 6,581,714 and 6,789,640. Handlebar **18** may also support user instruments and other user controls such as a throttle, within the scope of the invention.

In operation of a vehicle that may operate on either two or four wheels, it may be beneficial that if a turn is initiated in one mode, it be smoothly continued, either as wheels leave the ground or as wheels remake ground contact. To that end, in accordance with preferred embodiments of the invention, a mechanical linkage is provided between the user yaw input and the forward wheels, while the rear wheels are controlled, in synchrony with any turn initiated by the user input, by means of differential rotation of the wheels. Referring to Fig. 10, vehicle steering is implemented, in accordance with the embodiment shown, by turning handlebar **18** about pivot **17**. This serves two functions: steering the forward wheels, and providing electrical input to cause differential rotation of the aft wheels. To steer the forward wheels, motion is transferred, via bellcrank **80**, to fore-aft axial motion of upper push rods **82**, as indicated by arrows **83** in Fig. 7. Bellcrank **80** is a lever with two arms forming a fixed angle between them, and a fulcrum at the apex of the angle. This allows rotational motion (of the handlebar pivot) substantially transverse to the ground to be transferred to motion (of the upper push rods) having a significant component parallel to the ground. Upper push rods **82**, in turn, via middle bellcranks **84**, transfer motion to lower pushrods **90**, shown in Fig. 11, which turn forward wheels **13** and **14** by causing them to pivot about vertical pivot axes **92**. It is to be understood that any other couplings, mechanical or motorized, between the user input and the angle of forward wheels **13** and **14**, may also be employed within the scope of the present invention.

At the same time that the user yaw input, such as the handlebar, governs the steering of the forward wheels as described above, a signal is generated, by means of a rotational transducer, or otherwise, to serve as the input to yaw controller **502** (shown in Fig. 3) to govern differential actuation of the rear wheels. Thus, the user-intended steering is accomplished, in accordance with this invention, whether or not the forward wheels are in contact with the ground. Various means of converting the mechanical user input (such as handlebar rotation angle) to a yaw signal input to the controller **70** are known in the art, such as those described in U.S. Patent no. 6,581,714, for example, and any such means are encompassed within the scope of the present invention.

**Claims**

1. A method for fore-aft stabilization of a vehicle (10) for motion in a specified direction over an underlying surface (106), the vehicle having a plurality of driven wheels including a forward wheel (13) and an aft wheel (21), and with the forward wheel having a force normal to the instantaneous direction of motion of the vehicle, **characterised by** the method comprising:

   applying a periodic torque to at least one of the wheels for inducing a small pitch modulation;
   detecting pitch variation of the vehicle in response to the applied periodic torque;
   detecting a force on the forward wheel (13) normal to the instantaneous direction of motion of the vehicle; and
   applying a stabilizing torque to the aft wheel on the basis, at least, of any detected pitch variation in response to the applied periodic torque and the detected force on the forward wheel normal to the instantaneous direction of motion of the vehicle.

2. The method according to claim 1, wherein the vehicle is a motorcycle.

3. The method according to claim 1, wherein the vehicle is an all-terrain vehicle.

4. The method according to claim 1 wherein the vehicle is a wheelchair.

**5.** The method according to claim 1, further comprising:

controlling operation of the vehicle in the same manner regardless of whether the forward wheel is in contact with a surface being traversed.

**6.** An apparatus for pitch stabilization of the motion of a vehicle (10) having at least one forward wheel and at least one aft wheel, the apparatus comprising:

a sensor (28) for sensing a force on the forward wheel (13) normal to an instantaneous direction of motion of the vehicle;
a motor actuator (24) for driving the aft wheel; and
a controller (30) for applying a torque to the aft wheel on the basis of a control law based at least on the normal force on the forward wheel, the controller being configured to apply a periodic torque to at least one of the wheels for inducing a small pitch modulation; and
a pitch detector arranged to detect pitch variation of the vehicle in response to the applied periodic torque; wherein the controller is configured to cause the motor actuator to apply a stabilizing torque to the at least one aft wheel on the basis of at least any detected pitch in response to the applied periodic torque and the detected force on the forward wheel normal to the instantaneous direction of motion of the vehicle.

**7.** The apparatus according to claim 6, further comprising a second sensor (28) for sensing a force on the forward wheel (14) normal to the instantaneous direction of motion of the vehicle.

**8.** A stabilized vehicle comprising:

at least one forward wheel (13);
at least one aft wheel (21);
the apparatus for pitch stabilization according to claim 6; and
at least one sensor (28) for sensing an instantaneous pitch of the vehicle.

**9.** The apparatus of claim 6 or 7, wherein the vehicle is a motorcycle.

**10.** The apparatus of claim 6 or 7, wherein the vehicle is an all terrain vehicle.

**11.** The apparatus of claim 6 or 7 wherein the vehicle is a wheelchair.

**12.** The apparatus of claim 6 or 7, wherein the controller (30) controls operation of the vehicle in the same manner regardless of whether the forward wheel is in contact with a surface being traversed.

**13.** The stabilized vehicle of claim 8, wherein the vehicle is a motorcycle, an all terrain vehicle or a wheelchair.

**14.** The stabilized vehicle of claim 8, wherein the controller (30) controls operation of the vehicle in the same manner regardless of whether the forward wheel is in contact with a surface being traversed.

**Patentansprüche**

**1.** Verfahren zur Vorwärts-Rückwärts-Stabilisierung eines Fahrzeugs (10) zur Bewegung in einer bestimmten Richtung über einer zugrundeliegenden Oberfläche (106), wobei das Fahrzeug eine Vielzahl von angetriebenen Rädern einschließlich eines Vorderrads (13) und eines Hinterrads (21) aufweist und wobei das Vorderrad eine Kraft senkrecht zu der momentanen Bewegungsrichtung des Fahrzeugs aufweist, **dadurch gekennzeichnet, dass** das Verfahren Folgendes umfasst:

Aufbringen eines periodischen Drehmoments an mindestens einem der Räder, um eine kleine Steigungsmodulation herbeizuführen;
Erfassen einer Steigungsänderung des Fahrzeugs als Reaktion auf das aufgebrachte periodische Drehmoment;
Erfassen einer Kraft am Vorderrad (13) senkrecht zu der momentanen Bewegungsrichtung des Fahrzeugs; und
Aufbringen eines stabilisierenden Drehmoments am Hinterrad auf der Basis von mindestens einer erfassten Steigungsänderung als Reaktion auf das aufgebrachte periodische Drehmoment und die erfasste Kraft am Vorderrad senkrecht zu der momentanen Bewegungsrichtung des Fahrzeugs.

**2.** Verfahren nach Anspruch 1, wobei das Fahrzeug ein Motorrad ist.

**3.** Verfahren nach Anspruch 1, wobei das Fahrzeug ein Geländewagen ist.

**4.** Verfahren nach Anspruch 1, wobei das Fahrzeug ein Rollstuhl ist.

**5.** Verfahren nach Anspruch 1, ferner umfassend:

Steuerbetrieb des Fahrzeugs in gleicher Weise unabhängig davon, ob das Vorderrad mit einer Oberfläche in Kontakt ist, die überquert wird.

**6.** Vorrichtung zur Steigungsstabilisierung der Bewegung eines Fahrzeugs (10), das mindestens ein Vorderrad und mindestens ein Hinterrad aufweist, wobei die Vorrichtung Folgendes umfasst:

einen Sensor (28) zum Erfassen einer Kraft am Vorderrad (13) senkrecht zu einer momentanen Bewegungsrichtung des Fahrzeugs;
einen Stellmotor (24) zum Antreiben des Hinterrads; und
eine Steuerung (30) zum Aufbringen eines Drehmoments am Hinterrad auf der Basis eines Steuerungsgesetzes, das mindestens auf der senkrechten Kraft am Vorderrad basiert, wobei die Steuerung dazu ausgelegt ist, ein periodisches Drehmoment an mindestens einem der Räder aufzubringen, um eine kleine Steigungsmodulation herbeizuführen; und
einen Steigungsdetektor, der angeordnet ist, um eine Steigungsänderung des Fahrzeugs als Reaktion auf das aufgebrachte periodische Drehmoment zu erfassen;
wobei die Steuerung dazu ausgelegt ist, zu verursachen, dass der Stellmotor ein stabilisierendes Drehmoment an dem mindestens einen Hinterrad auf der Basis von mindestens einer erfassten Steigung als Reaktion auf das aufgebrachte periodische Drehmoment und die erfasste Kraft am Vorderrad senkrecht zu der momentanen Bewegungsrichtung des Fahrzeugs anwendet.

**7.** Vorrichtung nach Anspruch 6, ferner umfassend einen zweiten Sensor (28) zum Erfassen einer Kraft am Vorderrad (14) senkrecht zu der momentanen Bewegungsrichtung des Fahrzeugs.

**8.** Stabilisiertes Fahrzeug, umfassend:

mindestens ein Vorderrad (13);
mindestens ein Hinterrad (21);
die Vorrichtung zur Steigungsstabilisierung nach Anspruch 6; und
mindestens einen Sensor (28) zum Erfassen einer momentanen Steigung des Fahrzeugs.

**9.** Vorrichtung nach Anspruch 6 oder 7, wobei das Fahrzeug ein Motorrad ist.

**10.** Vorrichtung nach Anspruch 6 oder 7, wobei das Fahrzeug ein Geländewagen ist.

**11.** Vorrichtung nach Anspruch 6 oder 7, wobei das Fahrzeug ein Rollstuhl ist.

**12.** Vorrichtung nach Anspruch 6 oder 7, wobei die Steuerung (30) einen Betrieb des Fahrzeugs unabhängig davon auf dieselbe Weise steuert, ob das Vorderrad mit einer Oberfläche in Kontakt ist, die überquert wird.

**13.** Stabilisiertes Fahrzeug nach Anspruch 8, wobei das Fahrzeug ein Motorrad, ein Geländewagen oder ein Rollstuhl ist.

**14.** Stabilisiertes Fahrzeug nach Anspruch 8, wobei die Steuerung (30) einen Betrieb des Fahrzeugs unabhängig davon auf dieselbe Weise steuert, ob das Vorderrad mit einer Oberfläche in Kontakt ist, die überquert wird.

**Revendications**

**1.** Procédé de stabilisation avant-arrière d'un véhicule (10) pour effectuer mouvement dans une direction prédéterminée sur une surface sous-jacente (106), le véhicule ayant une pluralité de roues motrices incluant une roue avant (13) et une roue arrière (21) et avec la roue avant ayant une force normale à la direction instantanée de mouvement du véhicule,

**caractérisé en ce que** le procédé comprend

l'application d'un couple périodique à au moins l'une des roues pour induire une petite modulation de tangage ;

la détection de la variation de tangage du véhicule en réponse au couple périodique appliqué ;

la détection d'une force sur la roue avant (13) normale à la direction de mouvement instantanée du véhicule ; et

l'application d'un couple de stabilisation à la roue arrière sur la base, au moins, de toute variation de tangage détectée en réponse au couple appliqué périodique et la force détectée sur la roue avant normale à la direction instantanée de mouvement du véhicule.

2. Procédé selon la revendication 1, dans lequel le véhicule est une motocyclette.

3. Procédé selon la revendication 1, dans lequel le véhicule est un véhicule tout-terrain.

4. Procédé selon la revendication 1, dans lequel le véhicule est un fauteuil roulant.

5. Procédé selon la revendication 1, comprenant en outre :

la commande du fonctionnement du véhicule de la même manière, que la roue avant soit en contact ou non avec une surface traversée.

6. Appareil pour la stabilisation de tangage du mouvement d'un véhicule (10) comportant au moins une roue avant et au moins une roue arrière, l'appareil comprenant :

un capteur (28) pour détecter une force sur la roue avant (13) normale à une direction instantanée de mouvement du véhicule ;

un actionneur de moteur (24) pour entraîner la roue arrière ; et

un dispositif de commande (30) pour appliquer un couple à la roue arrière sur la base d'une loi de commande en fonction au moins de la force normale sur la roue avant, le dispositif de commande étant configuré pour appliquer un couple périodique à au moins l'une des roues pour induire une petite modulation de tangage ; et

un détecteur de tangage, agencé pour détecter la variation de tangage du véhicule en réponse au couple périodique appliqué ;

où le dispositif de commande est configuré pour amener l'actionneur du moteur à un couple de stabilisation à la roue arrière sur la base, au moins, de toute variation de tangage détectée en réponse au couple appliqué périodique et la force détectée sur la roue avant normale la direction instantanée de mouvement du véhicule.

7. Appareil selon la revendication 6, comprenant en outre un second capteur (28) destiné à détecter une force sur la roue avant (14) normale à la direction instantanée de mouvement du véhicule.

8. Véhicule stabilisé comprenant :

au moins une roue avant (13) ;

au moins une roue arrière (21) ;

l'appareil de stabilisation de tangage selon la revendication 6 ; et

au moins un capteur (28) pour détecter un tangage instantané du véhicule.

9. Appareil selon les revendications 6 ou 7, dans lequel le véhicule est une motocyclette.

10. Appareil selon les revendications 6 ou 7, dans lequel le véhicule est un véhicule tout-terrain.

11. Appareil selon les revendications 6 ou 7, dans lequel le véhicule est un fauteuil roulant.

12. Appareil selon les revendications 6 ou 7, dans lequel le dispositif de commande (30) commande le fonctionnement du véhicule de la même manière, que la roue avant soit en contact ou non avec une surface traversée.

13. Véhicule stabilisé selon la revendication 8, dans lequel le véhicule est une motocyclette, un véhicule tout terrain ou un fauteuil roulant.

**14.** Véhicule stabilisé selon la revendication 8, dans lequel le dispositif de commande (30) commande le fonctionnement du véhicule de la même manière, que la roue avant soit en contact ou non avec une surface traversée.

EP 1 805 071 B1
y

(PRIOR ART)
FIG. 1A

(PRIOR ART)
FIG. 1B

12

FIG. 2

FIG. 3

FIG. 4A

EP 1 805 071 B1

FIG. 4B

FIG. 5A

FIG. 5B

FIG. 5C

FIG. 6

FIG. 7

FIG. 8

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004007264 A1
- GB 2399579 A
- US 20030014167 A1
- US 2003226698 A1
- US 5701965 A
- US 5971091 A
- US 6302230 B
- US 6311794 B
- US 6553271 B
- US 6581714 B
- US 6789640 B
- US 6332103 B
- US 6288505 B